(19) Europäisches Patentamt
European Patent Office
Office européen des brevets

(11) **EP 0 689 568 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(21) Anmeldenummer: **94910376.6**

(22) Anmeldetag: **07.03.1994**

(51) Int Cl.6: **C09D 5/44**, C09D 175/12, C09D 163/00
// (C09D175/12, 133:08), (C09D163/00, 133:08)

(86) Internationale Anmeldenummer:
**PCT/EP94/00672**

(87) Internationale Veröffentlichungsnummer:
**WO 94/21736 (29.09.1994 Gazette 1994/22)**

(54) **BINDEMITTELSYSTEME FÜR DIE ELEKTROTAUCHLACKIERUNG**

BINDER SYSTEMS FOR USE IN ELECTRO-DIP COATING

SYSTEMES DE LIANTS POUR LA PEINTURE ELECTROPHORETIQUE

(84) Benannte Vertragsstaaten:
**AT BE CH DE ES FR GB IT LI SE**

(30) Priorität: **17.03.1993 DE 4308428**

(43) Veröffentlichungstag der Anmeldung:
**03.01.1996 Patentblatt 1996/01**

(73) Patentinhaber: **BASF Coatings Aktiengesellschaft 48165 Münster (DE)**

(72) Erfinder:
• **HÜMKE, Klaus**
  **D-67159 Friedelsheim (DE)**
• **SCHUPP, Hans**
  **D-67549 Worms (DE)**
• **SCHWERZEL, Thomas**
  **D-67149 Meckenheim (DE)**
• **FAUL, Dieter**
  **D-67150 Niederkirchen (DE)**
• **FOBBE, Helmut**
  **D-58638 Iserlohn (DE)**
• **STRAUSS, Udo**
  **D-48149 Münster (DE)**

(56) Entgegenhaltungen:
**EP-A- 0 184 467**

**Beschreibung**

Die vorliegende Erfindung betrifft die Verwendung von Polymerisaten (I) aus überwiegenden Anteilen Ethylacrylat und/oder n-Propylacrylat als Zusatz zu Elektrotauchbädern für die Verbesserung der Oberflächenbeschaffenheit der mittels Elektrotauchlackierung überzogenen Gegenstände.

Weiterhin betrifft die Erfindung neue, für die Elektrotauchlakkierung geeignete Bindemittelsysteme auf der Grundlage von basischen, thermisch vernetzbaren Epoxid- oder Polyurethanharzen als Bindemittel (B), enthaltend 0,001 bis 1 Gew.-% eines Polymerisates (I) aus überwiegenden Anteilen Ethylacrylat und/oder n-Propylacrylat, bezogen auf den Gesamtfeststoffgehalt des Bindemittelsystems. Außerdem betrifft die Erfindung neue Pigmentpastenzubereitungen für die Elektrotauchlackierung, die die Polymerisate (I) enthalten. Weiterhin betrifft die Erfindung Elektrotauchlackbäder mit den neuen Bindemittelsystemen oder Pigmentpastenzubereitungen.

Es ist allgemein bekannt, metallische Gegenstände mit Hilfe der kathodischen Elektrotauchlackierung zu überziehen, wovon besonders in der automobilindustrie Gebrauch gemacht wird. Man verwendet hierzu Elektrotauchlacksysteme, die im allgemeinen als wesentliche Bestandteile ein Bindemittel - auch Grundharz genannt -, eine Vernetzungskomponente und eine Pigmentpaste enthalten.

Als Bindemittel sind Epoxid- und Polyurethanharze in zahlreichen Ausgestaltungen bekannt. In der EP-A 261 385 werden fremdvernetzende Bindemittelkombinationen auf der Basis eines Hydroxyl- und Aminogruppen enthaltenden Epoxidharzes und eines aminogruppenhaltigen Poly(meth)acrylatharzes für die kathodische Elektrotauchlackierung beschrieben. Ferner sind Lacksysteme bekannt, die neben den Hauptkomponenten Hilfsstoffe enthalten, die die Oberflächenspannung im Lack reduzieren und so die Oberflächenbeschaffenheit von elektrotauchlackierten Gegenständen verbessern. Ihr Zusatz ist insbesondere dann erforderlich, wenn die verwendeten Bindemittelsysteme zu Lackverlaufstörungen und zur Kraterbildung im Lackfilm neigen sowie Haftungsprobleme der anschliessend aufgezogenen Decklacke hervorrufen. Die bisher bekannten Bindemittelsysteme, die Silikonöle, Polyetherurethane (DE-A 37 01 547) oder Polybutylacrylate (EP-A 422 533) als Hilfsstoffe enthalten, verleihen den fertigen Lacken die genannten nachteiligen Eigenschaften in mehr oder weniger stark ausgeprägter Form.

Aufgabe der vorliegenden Erfindung war es, neue Bindemittelsysteme auf der Grundlage von basischen, thermisch vernetzbaren Epoxid- oder Polyurethanharzen als Bindemitteln zu finden, die sowohl im Hinblick auf die Oberflächenbeschaffenheit der kathodisch abgeschiedenen Lacküberzüge als auch auf die Haftung von nachträglich aufgebrachten Deckbeschichtungen ein gutes Verhalten zeigen.

Demgemäß wurde die Verwendung eingangs definierten Polymerisate (I) als Zusatz zu Elektrotauchbädern für die Verbesserung der Oberflächenbeschaffenheit der mittels Elektrotauchlackierung überzogenen Gegenstände gefunden.

Weiterhin wurden neue Bindemittelsysteme und neue Pigmentpastenzubereitungen für die Elektrotauchlackierung gefunden sowie neue Elektrotauchlackbäder mit den neuen Bindemittelsystemen und Pigmentpastenzubereitungen.

Die erfindungsgemäßen Bindemittelsysteme enthalten 0,001 bis 1 Gew.-%, vorzugsweise 0,01 bis 0,75 Gew.-% eines Polymerisates (I) aus überwiegenden Anteilen Ethylacrylat und/oder n-Propylacrylat, bezogen auf den Gesamtfeststoffgehalt des Bindemittelsystems. Unter der Bezeichnung "überwiegende Anteile" sind diejenigen Mengen an Ethyl- und/oder n-Propylacrylat zu verstehen, welche zu mehr als 50 Mol-% in einem Polymerisat (I) enthalten sind. Als Polymerisate (I) sind besonders Homopolymerisate aus Ethylacrylat und aus n-Propylacrylat sowie Copolymerisate aus diesen beiden Monomerbausteinen geeignet.

Ferner kommen Polymerisate (I) in Betracht, die in geringen Mengen weitere olefinisch ungesättigte Monomeren enthalten. In der Regel ist ihr Anteil, bezogen auf das Polymerisat (I), kleiner als 50 Mol-%, vorzugsweise 0,1 bis 10 Mol-%. Beispielsweise können folgende Comonomere verwendet werden:

- aminogruppenhaltige Monomere,
  z. B. N-Dialkylacrylsäure- und -methacrylsäure-aminoalkylester wie

    N-Dimethyl-aminoethylacrylat
    N-Dimethyl-aminoethylmethacrylat
    N-Diethyl-aminoethylacrylat
    N-Diethyl-aminoethylmethacrylat
    N-Dimethyl-amino-n-propylacrylat
    N-Dimethyl-amino-n-propylmethacrylat
    N-Diethyl-amino-n-propylacrylat und
    N-Diethyl-amino-n-propylmethacrylat

    sowie N-Dialkyl-aminoalkylacrylamide und -methacrylamide wie

N-Dimethyl-aminoethylacrylamid
N-Dimethyl-aminoethylmethacrylamid
N-Diethyl-aminoethylacrylamid und
N-Diethyl-aminoethylmethacrylamid

wobei sich auch N-Alkanol-substituierte Derivate von Aminoalkylacrylaten und -methacrylaten und -acrylamiden und -methacrylamiden sowie vinylsubstituierte tertiäre Aminofunktionen enthaltende Heterocyclen wie N-Vinylimidazol eignen;

- hydroxylgruppenhaltige Monomere,
  z. B. Hydroxyalkylacrylate und -methacrylate wie

  2-Hydroxyethylacrylat
  2-Hydroxyethylmethacrylat
  3-Hydroxypropylacrylat
  3-Hydroxypropylmethacrylat
  4-Hydroxybutylacrylat und
  4-Hydroxybutylmethacrylat

- Alkylacrylate wie

  i-Propylacrylat
  n-Butylacrylat
  i-Butylacrylat
  n-Pentylacrylat und
  n-Hexylacrylat

- Alkylmethacrylate wie

  Ethylmethacrylat
  n-Propylmethacrylat
  i-Propylmethacrylat
  n-Butylmethacrylat
  i-Butylmethacrylat
  n-Pentylmethacrylat
  n-Hexylmethacrylat und
  2-Ethylhexylmethacrylat

Die Polymerisate (I) weisen im allgemeinen ein mittleres Molekulargewicht zwischen 5 000 und 50 000, vorzugsweise zwischen 7 500 und 25 000 auf.

Die Herstellung von I ist an sich bekannt und kann auf übliche Weise durch radikalische Polymerisation, beispielsweise durch Lösungspolymerisation bei einer Temperatur von 50 bis 200°C, besonders 70 bis 150°C erfolgen. Als Lösungsmittel kommen z. B. n-Butanol, Isobutanol, sek.-Butanol, tert.-Butanol, Dioxan, Tetrahydrofuran, Aceton, Methoxypropanon, Methoxy-, Ethoxy- und n-Butoxyethanol sowie Diethylenglykoldimethylether, Ethylen-, Propylen- und Diethylenglykol in Betracht, wobei sek.-Butanol besonders geeignet ist. Als Lösungsmittel eigenen sich ferner Cyclohexan, Benzol, Toluol und Xylol.

Als Radikalinitiatoren können die üblichen Startersubstanzen wie 1,1'-Azo-bisisobutyronitril, 1,1'-Azo-biscyclohexancarbonitril, 2,2'-Azo-bis-(2-cyanpropan), Benzoylperoxid, Di-tert.-butylperoxid, tert.-Butylhydroperoxid, Cumolhydroperoxid und tert.-Butylperbenzoat sowie besonders tert.-Butylperoctoat verwendet werden, wobei die Menge an Initiator zweckmäßigerweise 0,1 bis 5 Gew.-%, vorzugsweise 0,5 bis 3 Gew.-%, bezogen auf die eingesetzte Monomerenmenge, beträgt.

Im allgemeinen erfolgt die Zugabe des Initiators als Lösung, und zwar entweder in den Monomeren oder vorzugsweise im Lösungsmittel.

Ferner können die Polymerisate (I) durch anionische Polymerisation mittels geeigneter lithiumorganischer Verbindungen als Starter, beispielsweise n-Butyllithium oder Methyllithium, in Lösungsmitteln wie Diethylether oder Tetrahydrofuran hergestellt werden.

Im allgemeinen werden die Polymerisate (I) als Dispersionen verwendet. Sie können auch als Lösung in den aus der Polymerisation stammenden Lösungsmitteln verwendet werden.

Üblicherweise werden die Dispersionen von I so hergestellt, daß sie einen Feststoffgehalt von 10 bis 70 Gew.-%, bevorzugt 30 bis 55 Gew.-% aufweisen.

Die Bindemittel (B) in den erfindungsgemäßen Bindemittelsystemen sind basische, thermisch vernetzbare Polymere vom Typ der Epoxid- und Polyurethanharze. Als Bindemittel - auch Grundharz genannt - eignen sich solche Materialien, die mit Säuren protonierbare Gruppen, z. B. Amino- oder Thiolgruppen, tragen. Diese Gruppen sorgen nach Protonierung für die Dispergierbarkeit der Harze in Wasser. Besonders geeignet sind Harze mit primären und/ oder sekundären Aminogruppen. Aminogruppen enthaltende Harze sind z. B. Amino-Epoxid- und Amino-Polyurethanharze.

Alle Grundharze haben vorzugsweise ein mittleres Molekulargewicht $\overline{M}_w$, meßbar in üblicher Weise mittels Gelpermeationschromatographie, von 200 bis 20 000, besonders bevorzugt 1 000 bis 15 000. Die Gesamtzahl der mit Säure protonierbaren Gruppen beträgt im Mittel vorzugsweise 1 bis 10, besonders bevorzugt 2 bis 7 pro Polymerharzkette.

Neben den Polyurethanharzen sind solche Grundharze besonders bevorzugt, deren Grundstrukturen auf Epoxidharzen, insbesondere auf solchen mit endständigen Epoxidgruppen, basieren. Als Epoxidharze sind besonders Materialien geeignet, die im Mittel 1 bis 3, vorzugsweise 1,8 bis 2,2 Epoxidgruppen pro Molekül enthalten und ein mittleres Molekulargewicht von 100 bis 10 000 haben. Bevorzugt sind Epoxidharze mit einem mittleren Molekulargewicht $\overline{M}_w$ von 150 bis 5 000, insbesondere von 200 bis 3 500.

Als Epoxidharze eignen sich die in üblicher Weise erhältlichen Umsetzungsprodukte aus mehrwertigen Phenolen mit Epihalohydrinen in Gegenwart einer Base. Beispiele für mehrwertige Phenole sind:

- Resorcin
- Hydrochinon
- 4,4'-Dihydroxybenzophenon
- 4,4'-Dihydroxydiphenyl
- Bis-(4-hydroxyphenyl)-methan
- 1,1-Di-(4-hydroxyphenyl)-ethan
- 2,2-Di-(4-hydroxyphenyl)-propan (Bisphenol A)
- 1,1-Di-(4-hydroxyphenyl)-isobutan
- 1,5-Dihydroxynaphthalin und
- Novolake

Besonders bevorzugt wird Bisphenol A.

Als Epihalohydrin ist Epichlorhydrin bevorzugt. Darüber hinaus können Epihalohydrine auch völlig oder teilweise durch Epoxidendgruppen tragende Polyether ersetzt werden. Als Beispiele hierfür seien Polyether genannt, die aus Ethylenoxid, Propylenoxid und Tetrahydrofuran aufgebaut sind.

Neben den Epoxidharzen aus den mehrwertigen Phenolen und Epihalohydrinen können als Harze auch Umsetzungsprodukte aus Halohydrinen und mehrwertigen aliphatischen Alkoholen wie Ethylenglykol, Diethylenglykol, Triethylenglykol, 1,2-Propylenglykol, 1,3-Propylenglykol, 1,4-Butandiol, 1,5-Pentandiol, 1,6-Hexandiol, 1,2,6-Hexantriol, Glycerin und 2,2-Di-(4-hydroxycyclohexan)-propan verwendet werden. Ganz besonders bevorzugt sind solche Epoxidharze, die durch Umsetzung von mehrwertigen Phenolen, insbesondere Bisphenol A, mit Diglycidylethern von Bisphenol A erhältlich sind. Die Umsetzung erfolgt üblicherweise in Gegenwart von z. B. Propylenglykolphenylether, Xylol oder Isobutanol als Lösungsmittel bei einer Temperatur von 50 bis 200°C, insbesondere 100 bis 180°C. Im allgemeinen wird die Reaktion durch Triphenylphosphin oder Dimethylbenzylamin katalysiert.

Die als Bindemittel geeigneten basischen Epoxidharze sind insbesondere Amino-Epoxidharze, die durch Umsetzung von epoxidgruppenhaltigen Harzen - mit vorzugsweise endständigen Epoxidgruppen - mit einem aliphatischen Amin, welches eine oder mehrere weitere funktionelle Gruppen wie Aminogruppen und/oder Hydroxylgruppen trägt, erhältlich sind. Dabei empfiehlt es sich, das Amin im Überschuß einzusetzen. Zu den aliphatischen Aminen zählen Alkylendiamine, Alkanolamine, Polyoxyalkylenpolyamine und mehrwertige Polyolefinamine.

Als derartige Verbindungen kommen in Betracht:

- Alkylendiamine mit zwei primären Aminogruppen und mit 2 bis 20 Kohlenstoffatomen im Alkylenrest, vor allem Ethylendiamin, 1,2- und 1,3-Diaminopropan, 1,4-Diaminobutan, Neopentandiamin und Hexamethylendiamin
- Alkylalkanolamine mit jeweils 1 bis 20 Kohlenstoffatomen im Alkyl- und Alkanolrest, wobei die Kettenlänge der Reste gleich oder verschieden voneinander sein kann, z. B. Ethylethanolamin, Methylisopropanolamin und besonders Methylethanolamin
- Polyoxyalkylenpolyamine, z. B. Polyoxyethylenpolyamin, Polyoxypropylenpolyamin und Polyoxybutylenpolyamin
- Polyolefinamine wie aminterminierte Butadien-Acrylnitril-Copolymere mit einem mittleren Molekulargewicht von 1 000 bis 10 000

Ferner eignen sich auch Alkylamine, darunter besonders Dialkylamine wie Dimethylamin und Diethylamin. Falls gewünscht, können die Amino-Epoxidharze mit Dicarbonsäuren kettenverlängert werden, z. B. mit Sebacinsäure oder einer dimeren Fettsäure. Eine Mitverwendung von Monocarbonsäuren wie einer $C_{12}$- bis $C_{24}$-Fettsäure ist ebenfalls möglich.

Ferner können die Amino-Epoxidharze in Mischung mit bis zu 20 Gew.-% eines Polyesters verwendet werden. Es handelt sich hierbei um Polykondensationsprodukte aus Dicarbonsäuren und mehrwertigen Alkoholen. Sie haben ein mittleres Molekulargewicht von 200 bis 20 000, vorzugsweise von 200 bis 5000.

Als Carbonsäurekomponente kommen Verbindungen wie Maleinsäure, Bernsteinsäure, Glutarsäure, Adipinsäure, Pimelinsäure, Korksäure, Azelainsäure, Sebacinsäure, Cyclohexandicarbonsäure, Phthalsäure, Isophthalsäure und Terephthalsäure sowie funktionelle Derivate dieser Säuren in Betracht.

Als Alkoholkomponenten seien aliphatische Diole wie Ethylenglykol, Diethylenglykol, Triethylenglykol, Propandiol, Butandiol, Hexandiol, Neopentylglykol und Hydroxypivalinsäureneopentylglykolester genannt sowie weiterhin höherwertige Alkohole wie Trimethylolpropan, Glycerin, Erythrit, Pentaerythrit, Trimethylolbenzol und Tris-(hydroxyethyl)-isocyanurat.

Bevorzugt ist die Einführung von Aminkomponenten in die Epoxidharze durch Umsetzung mit sogenannten Amidaminen, d. h. Kondensationsprodukten aus Polyaminen, bevorzugt aliphatischen Polyaminen wie 1,6-Hexamethylendiamin, Diethylentriamin und Triethylentetramin, wobei 1,6-Hexamethylendiamin besonders bevorzugt ist, und Dicarbonsäuren, bevorzugt Dimerfettsäuren. Terminierende Monocarbonsäuren, bevorzugt $C_{12}$-$C_{20}$-Carbonsäuren, können mit in das Amidamin eingebaut werden.

Man nimmt die Umsetzung des Epoxidharzes mit der Aminkomponente vorzugsweise bei 50 bis 90°C in einem polaren Lösungsmittel wie Isobutanol und sek.-Butanol vor, das in der Regel in Mengen von 5 bis 50 Gew.-% des Ansatzes vorhanden ist. Die Reaktion ist im allgemeinen nach zwei Stunden beendet.

Ferner haben sich basische Polyurethanharze mit einem mittleren Molekulargewicht $\overline{M}_w$ von 200 bis 10 000 aus aliphatischen und/oder aromatischen Diisocyanaten und aliphatischen Diolen oder Polyolen als geeignete Grundharze erwiesen. Als Diisocyanate seien vor allem Tetramethylendiisocyanat, 1,6-Hexamethylendiisocyanat, Isophorondiisocyanat, Diphenylmethandiisocyanat, Toluylendiisocyanat, Naphthylendiisocyanat und 4,4'-Diphenyletherdiisocyanat genannt.

Als geeignete Diole kommen vor allem Ethylenglykol, Diethylenglykol, Triethylenglykol, Propandiol, Butandiol, Hexandiol, Neopentylglykol und Hydroxypivalinsäureneopentylglykol in Betracht. Es können aber auch höherwertige Alkohole wie Trimethylolpropan, Glycerin, Pentaerythrit und Trimethylolbenzol verwendet werden.

Unter den basischen Polyurethanharzen sind Amino-Polyurethanharze als Grundharz bevorzugt. Durch Reaktion der Isocyanate mit terminierenden mehrfunktionellen Aminen lassen sich primäre und sekundäre Aminogruppen in das Harz einführen. Als Amine eignen sich Verbindungen mit primären und sekundären Aminfunktionen wie Diethylentriamin, Triethylentetramin, Tetraethylenpentamin und Polyetherdiamine mit endständigen Aminogruppen. Weiterhin sind auch Amine mit primären und tertiären Aminfunktionen geeignet, beispielsweise Dimethylaminopropylamin und Diethylaminopropylamin.

Das Einführen von Aminogruppen in das Polyurethanharz kann nach einer der üblichen Methoden erfolgen, wie sie beispielsweise in der US-A 4 016 120 beschrieben sind.

Die basischen Epoxid- und Polyurethanharze können durch Protonieren mit Säure in eine wasserlösliche oder wasserdispergierbare Form überführt werden. Zur teilweisen oder vollständigen Neutralisation geeignete Säuren sind organische Säuren wie Ameisensäure, Essigsäure und Milchsäure, aber auch Mineralsäuren wie Phosphorsäure.

Für die meisten anwendungstechnischen Zwecke, z. B. diejenigen der Elektrotauchlackierung enthalten die erfindungsgemäßen Bindemittelsysteme als weiterer Bestandteil einen Vernetzer (V), und zwar vorzugsweise in einer Menge von 10 bis 50 Gew.-%, besonders bevorzugt 25 bis 40 Gew.-%.

Bei den Vernetzern handelt es sich im allgemeinen um mehrfunktionelle monomere oder polymere Verbindungen, die in der Wärme über Kondensations- und Additionsreaktionen vernetzend wirken.

Als Vernetzer sind insbesondere verkappte Isocyanate oder Mischungen verschiedener Isocyanate sowie phenolische Mannich-Basen geeignet.

Vernetzer vom Isocyanattyp sind z.B. 1,6-Hexamethylendiisocyanat, die Naphthalindiisocyanate und Triphenylmethantriisocyanate sowie die Trimeren von 1,6-Hexamethylendiisocyanat, Isophorondiisocyanat und Toluylendiisocyanat. Bevorzugt werden Toluylendiisocyanat und Isophorondiisocyanat. Besonders bevorzugt ist das Trimere des 1,6-Hexamethylendiisocyanates.

Zum Verkappen eignen sich beispielsweise einwertige Alkohole, bevorzugt kurzkettige aliphatische Alkohole wie Methanol, Ethanol, n-Propanol, Isopropanol, n-Butanol, Isobutanol und sek.-Butanol. Ferner eignen sich Monoether von aliphatischen Diolen wie Ethylenglykolmonopropylether und Ethylenglykolmonobutylether. Weiterhin kommen sekundäre Amine, vorzugsweise kurzkettige aliphatische Amine wie Dimethyl-, Diethyl-, Dipropyl- und Dibutylamin, sowie Alkanolamine, insbesondere tertiäre Alkanolamine wie Tri-(n-propanol)-amin und Tri-(isopropanol)-amin oder deren Gemische in Betracht. Die mehrfunktionellen Isocyanate werden mit den Verkappungsverbindungen in solchen Mengen in an sich bekannter Weise umgesetzt, daß im Mittel möglichst alle Isocyanatgruppen pro Molekül verkappt werden.

Bei den aus der DE-A 34 22 457 bekannten Vernetzern vom Typ der phenolischen Mannich-Basen handelt es sich um aminomethylierte Phenole, die durch Umsetzung von mehrkernigen Phenolen mit Formaldehyd und sekundären Aminen erhalten werden.

Darüber hinaus können als Vernetzer beispielsweise Aminoplastharze wie Harnstoff-, Formaldehyd-, Melamin- und Benzoguanaminharze, über Umesterung und Esteraminolyse härtende Vernetzer, z.B. β-Hydroxyalkylester gemäß der EP-A 40 867 und Carbalkoxymethylester gemäß der DE-A 32 33 139 verwendet werden.

Vorteilhaft ist es, die Vernetzungskomponente (V) gemeinsam mit dem Grundharz (B) zu dispergieren. Dies kann erfolgen, indem man (B) und (V) mischt, mit Säure neutralisiert und anschließend in Wasser dispergiert. Das Gemisch aus (B) und (V), welches in der Regel 50 bis 90 Gew.-% B und 10 bis 50 Gew.-% V enthält, kann auch in ein Säure/Wasser-Gemisch gegeben werden.

Die gemeinsame Dispersion von (B) und (V) wird üblicherweise auf Feststoffgehalte von 15 bis 45 Gew.-% eingestellt.

Im allgemeinen werden zur Herstellung von Elektrotauchbädern den erfindungsgemäßen Bindemittelsystemen, die das Polymerisat (I), das Bindemittel (B) und den Vernetzer (V) enthalten, Pigmentpasten zugesetzt.

Die Pigmentpasten enthalten neben den üblichen Pigmenten wie Titandioxid, Ruß und Bariumsulfat in der Regel Bindemittel, die zweckmäßigerweise dem Grundharz entsprechen, sowie Lösungsmittel, Füllstoffe wie Kreide und Natriumsilikate und Lackhilfsstoffe, z.B. Korrosionsinhibitoren, Entschäumer, Dispergierhilfsmittel und Härtungskatalysatoren.

Die Herstellung der Pigmentpasten erfolgt nach den üblichen Methoden. Im allgemeinen beträgt der Feststoffgehalt der Pigmentpasten 40 bis 70 Gew.-%.

Pigmentpasten, die ein Polymerisat (I) als Bindemittelkomponente enthalten, sind besonders bevorzugt.

In diesen erfindungsgemäßen Pigmentpastenzubereitungen aus Pigmenten, Bindemitteln, Lösungsmitteln, Füllstoffen und sonstigen Lackhilfsmitteln sind 0,0005 bis 0,5, insbesondere 0,1 bis 0,4 Gew.-% eines Polymerisates (I) enthalten.

Die Herstellung dieser Pigmentpastenzubereitungen erfolgt entsprechend der Herstellung der Pigmentpasten unter weiterer Zugabe eines Polymerisates (I). Die erfindungsgemäßen Pigmentpastenzubereitungen weisen einen Feststoffgehalt von 40 bis 70 Gew.-% auf.

Für die Herstellung der wäßrigen Elektrotauchlackbäder kann entweder eine bereits fertige, erfindungsgemäße Pigmentpastenzubereitung oder, jeweils als Einzelkomponente, ein Polymerisat (I) und eine Pigmentpaste in eine Dispersion von (B) und (V) gegeben werden. Für die Elektrotauchlackierung wird in den Tauchbädern im allgemeinen ein Feststoffgehalt von 10 bis 30 Gew.-% eingestellt.

Die erfindungsgemäßen Bindemittelsysteme sowie die erfindungsgemäßen Pigmentpastenzubereitungen werden für die Elektrotauchlackierung verwendet, wobei die hierin enthaltenen Polymerisate (I) aus überwiegenden Anteilen Ethylacrylat und/oder n-Propylacrylat als Zusatz zu Elektrotauchbädern für die Verbesserung der Oberflächenbeschaffenheit der mittels Elektrotauchlakkierung überzogenen Gegenstände dienen.

Die kathodische Elektrotauchlackierung erfolgt in an sich bekannter Weise. Die Abscheidung des Lackes erfolgt üblicherweise bei Temperaturen zwischen 20 und 35°C über einen Zeitraum von 1 bis 5 Minuten und bei pH-Werten zwischen 5 und 8, bevorzugt um den Neutralpunkt. Die Abscheidespannungen liegen in der Regel zwischen 50 und 500 Volt. Die zu überziehenden elektrisch leitenden Gegenstände, z.B. entfettete Tiefziehbleche, phosphatierte und verzinkte Stahlbleche werden als Kathode geschaltet. Der abgeschiedene Lackfilm wird zweckmäßigerweise bei Temperaturen oberhalb von 120°C, bevorzugt zwischen 140 und 180°C, über einen Zeitraum von 10 bis 45 Minuten gehärtet. Unter diesen Bedingungen der Elektrotauchlackierung lassen sich Lackfilme mit einer Filmdicke von 10 bis 35 µm erzeugen.

Lackfilme, die durch Abscheidung von Elektrotauchbädern, die die erfindungsgemäßen Bindemittelsysteme enthalten, hergestellt werden, weisen eine gute Oberflächenbeschaffenheit der überzogenen Gegenstände, d.h. geringe Lackverlaufstörungen und geringe Kraterbildung, bei gleichzeitig gutem Haftungsverhalten der nachfolgend aufgezogenen Lackschichten wie Decklacke auf.

Beispiele

1. Herstellung eines Polymerisates aus Ethyl- und n-Propylacrylat (I)

Ein Gemisch aus 220 g (2,2 mol) Ethylacrylat und 250,8 g (2,2 mol) n-Propylacrylat wurde innerhalb von zwei Stunden unter Stickstoffatmosphäre zu 356 g siedendem sek.-Butanol gegeben. Parallel hierzu erfolgte die Zugabe einer Lösung von 5,27 g (25 mmol) tert.-Butylperoctoat in 115 g sek.-Butanol über einen Zeitraum von 3,5 Stunden. Anschließend wurde noch weitere drei Stunden bei einer Temperatur von 75°C polymerisiert. Der Feststoffgehalt der Reaktionslösung betrug 50 %.

K-Wert: 18,8 (3 %ige Lösung von I in Aceton)
Oberflächenspannung: 30 mN/m
$\overline{M}_w$: 13750 g/mol

2. Herstellung eines Amino-Epoxidharzes- (Bindemittel B)

4850 g eines Diglycidylethers aus Bisphenol A und Epichlorhydrin (Epoxidäquivalentgewicht 485) wurden bei 65°C in 1039 g Toluol und 1039 g Isobutanol gelöst. Nach Abkühlen dieser Lösung auf 60°C wurde eine Lösung von 300,4 g (4 mol) Methylethanolamin in 128 g Isobutanol hinzugegeben. Nach Zugabe von 1850 g einer Lösung eines Amidamins wurde 2 Stunden auf 80°C erhitzt. Das Harz hatte einen Feststoffgehalt von 70 % und eine Aminzahl von 197 mg KOH pro g Harz. Die Zahl der mit Säure protonierbaren Gruppen und der Hydroxylgruppen betrug im Mittel 1,8.

Das Amidamin wurde durch Umsetzung von 5800 g (50 mol) 1,6-Hexamethylendiamin, 7250 g (12,5 mol) Dimerfettsäure und 1400 g (5 mol) Leinölfettsäure bei 195°C unter Abdestillieren des Reaktionswassers hergestellt. Nach Abkühlung auf 100°C und Verdünnung mit 5961 g Toluol betrug die Aminzahl 197 mg KOH pro g Harz.

3. Herstellung eines Vernetzers (V)

5042 g (10 mol) trimerisiertes 1,6-Hexamethylendiamin wurden in 3823 g Methylisobutylketon bei 70°C mit 3881 g (30 mol) Di-n-butylamin versetzt und bei dieser Temperatur gehalten, bis praktisch kein Isocyanat mehr nachweisbar war. Der Feststoffgehalt betrug 70 %.

4. Herstellung eines Bindemittel/Vernetzer-Gemisches (B/V)

700 g Amino-Epoxidharz (B) und 300 Vernetzer (V) wurden mit 19 g Essigsäure versetzt und in soviel Wasser dispergiert, daß man eine Dispersion mit einem Feststoffgehalt von 31 % erhielt. Durch azeotrope Destillation wurden die organischen Lösungsmittel entfernt. Mit Wasser wurde in der Dispersion ein Feststoffgehalt von 35 % eingestellt.

5. Herstellung einer Pigmentpaste (PP)

525,8 g Amino-Epoxidharz (B) wurden mit 16,5 g Essigsäure in 168,7 g Butylglykol und 600 g Wasser dispergiert. Nach Zugabe von 800 g Titandioxid, 11 g Ruß und 50 g basischem Bleisilikat wurde die Mischung in einer Kugelmühle auf eine Kornfeinheit von unter 3 μm gemahlen. Anschließend wurde mit Wasser ein Feststoffgehalt von ca. 50 % eingestellt.

6. Herstellung einer erfindungsgemäßen Pigmentpastenzubereitung PP/I aus PP und Polymerisat I

Die Herstellung dieser Pigmentpastenzubereitung PP/I erfolgte entsprechend dem Beispiel 5 unter weiterer Zugabe von 10,1 g Polymerisat I durch Dispergieren.
Feststoffgehalt: 49 %

7. Herstellung von Elektrotauchlack-Dispersionen

D1: Herstellung einer wäßrigen Dispersion aus B/V, I/1 und PP

1095 g des Gemisches B/V gemäß Beispiel 4 wurden mit 10,1 g des Polymerisates aus Ethyl- und n-Propylacrylat (I) aus Beispiel 1 vermischt. Nach Zugabe von 20,7 g Essigsäure wurde die Mischung in 1200 g Wasser dispergiert. Durch azeotrope Destillation wurden die organischen Lösungsmittel entfernt. Die erhaltene Dispersion wurde mit 568 g der Pigmentpaste PP aus Beispiel 5 versetzt, gerührt und mit Wasser auf eine Dispersionsmenge von 5000 g ergänzt.
Feststoffgehalt: 21 %

D2: Herstellung einer wäßrigen Dispersion aus PP/I und B/V

573 g Pigmentpaste PP/I gemäß Beispiel 6 wurden mit 1964 g des Gemisches B/V gemäß Beispiel 4 vermischt und mit Wasser auf eine Dispersionsmenge von 5000 g ergänzt.
Feststoffgehalt: 21 %

D3: Herstellung einer wäßrigen Dispersion aus B/V und PP (ohne Polymerisat I)

1095 g des Gemisches B/V gemäß Beispiel 4 wurden mit 20,7 g Essigsäure versetzt und in 1200 g Wasser dispergiert, daß man eine Dispersion mit einem Feststoffgehalt von 34 % erhielt. Die erhaltene Dispersion wurde mit 568 g Pigmentpaste PP gemäß Beispiel 5 versetzt, gerührt und mit Wasser auf eine Dispersionsmenge von 5000 g ergänzt.

Feststoffgehalt: 21 %

Die wäßrigen Elektrotauchlack-Dispersionen D1 - D3 ließ man unter Rühren 5 Tage bei Raumtemperatur altern.

Anwendungstechnische Prüfung

An als Kathode geschalteten phosphatierten Stahlblechen wurden bei 27°C innerhalb von 2 Minuten Lackfilme in üblicher Weise abgeschieden und 20 Minuten bei einer Temperatur von 160°C eingebrannt. Bei Abscheidespannungen von 350 bis 430 V wurden Schichtdicken von 22 bis 24 µm erzielt.

Die Qualität der abgeschiedenen Lackfilme wurde anhand von sechs Untersuchungen ermittelt. Es erfolgte jeweils eine optische Bewertung.

Folgende Untersuchungen wurden durchgeführt:

(a) Brückenbildung an Blechnähten und Flanschen

Bei diesem Test wird untersucht, in welchem Maße sich Lackstege an Blechnähten und Flanschen von miteinander verbundenen Werkstücken ausbilden. Hierzu werden Testbleche, die nach der Lackabscheidung Lackreste in den Blechnähten und Flanschen zurückhalten, einem Spülvorgang mit entsalztem Wasser unterworfen. Dabei lassen sich die Lackreste jedoch nicht immer vollständig entfernen, so daß sich beim anschließenden Einbrennvorgang Lackstege aus den zurückbleibenden Resten ausbilden.

Beurteilung:     0 ≙ keine Brückenbildung
                     5 ≙ starke Lackstege

(b) Lackausläufer an Blechnähten und Flanschen

Dieser Test wird entsprechend (a) an senkrecht stehenden Werkstücken vorgenommen. Beim Einbrennvorgang laufen die durch den Spülvorgang nicht vollständig entfernten Lackreste aus den Blechnähten und Flanschen heraus, da die Viskosität des Lackes aufgrund der steigenden Temperatur zunächst absinkt. Der anschließende Viskositätsanstieg bei der Vernetzungstemperatur des Lackes führt zur Ausbildung von Lackausläufern - auch Lacknasen genannt.

Beurteilung:     0 ≙ keine Markierungen
                     5 ≙ starke Lacknasen

(c) Ölspritzerempfindlichkeit und Kontaminationsresistenz

Von den zu beschichtenden Werkstücken können Substanzen wie Fette und Silikonöle in das Elektrotauchbad gelangen, die die Oberflächenspannung des Lackes herabsetzen. Sie werden beim Vorgang der Tauchlackierung zusammen mit dem Lack abgeschieden. Während des Einbrennens verursachen derartige auf und im Lackfilm vorhandene Substanzen einen Lackfluß. Diese Fließerscheinungen haben ihre Ausgangspunkte an den Abscheidungsstellen der störenden Substanzen, die im eingebrannten Lackfilm das Aussehen von Kratern haben.

Beurteilung:     0 ≙ keine Beeinflussung
                     5 ≙ starke Kraterbildung

(d) Wassertropfenempfindlichkeit

Bei diesem Test werden plastische Markierungen, die beim Vorgang des Einbrennens durch Verkochung von Wassertropfen hervorgerufen werden, beurteilt.

Nach der Lackabscheidung werden die Werkstücke in einer Sprühzone mit entsalztem Wasser gespült und durchlaufen, befestigt an einer Aufhängvorrichtung, für den Einbrennvorgang eine Ofenzone. Wassertropfen, die von dieser Vorrichtung auf die gespülte Lackoberfläche fallen, und vom vorherigen Spülvorgang auf dem Lack zurückgebliebene Wasserspuren können beim Einbrennen durch Verkochen plastische Markierungen auf dem Lackfilm, z. B. in Form kleiner Blasen, hervorrufen.

Beurteilung:      0 ≙ keine Markierungen

                  5 ≙ starke Aufkocher

(e) Salzsprühtest SST (nach DIN 50017)

Dieser Test dient zur Beurteilung des Haftungsverhalten von Decklacken. Dazu werden die unbehandelten und geritzten Bleche 240 Stunden bei 35°C einer 5 %igen Salzlösung ausgesetzt, die in einer Sprühkammer als feiner Nebel aufgebracht wird. Danach wird die Unterwanderung am Ritz in mm (nach DIN 50017), gemittelt über 5 Probebleche, gemessen.

(f) Decklackhaftungstest

Auf den lackierten Testblechen werden durch den Lack Gitterschnitte bis zur Blechoberfläche vorgenommen. Mittels Klebestreifen wird die Haftung des Decklackes geprüft. Die quantitativen Abplatzungen des Lackes werden mit folgenden prozentualen Abstufungen optisch beurteilt.

Beurteilung:      0 ≙ keine Abplatzungen

                  1 ≤ 5 %         "

                  2 ≤ 15 %       "

                  3 ≤ 35 %       "

                  4 ≤ 65 %       "

                  5 > 65 %       "

Die gleichen Untersuchungen werden an lackierten Testblechen durchgeführt, die zuvor 240 Stunden nach DIN 50 017 (Salzsprühtest, (e)) einer salzhaltigen Atmosphäre ausgesetzt waren.

Die Ergebnisse sind in der Tabelle zusammengestellt.

Tabelle

|  | Dispersionen | | |
| --- | --- | --- | --- |
|  | D1 | D2 | D3 (ohne Polymerisat I) |
| (a) Brückenbildung an Blechnähten und Flanschen | 4 | 3 | 5 |
| (b) Lackausläufer an Blechnähten und Flanschen | 3 | 3 | 5 |
| (c) Ölspritzerempfindlichkeit u. Kontaminationsresistenz | 3 | 2 | 4 |
| (d) Wassertropfenempfindlichkeit | 3 | 3 | 4-5 |
| (e) Salzsprühtest (DIN 50017) Unterwanderung am Ritz (mm) | 1,4 | 1,5 | 1,4 |
| (f) Decklackhaftungstest vor/nach 240 h Salzsprühtest | 1/2 | 1/2 | 0/1 |

**Patentansprüche**

1. Verwendung von Polymerisaten (I) aus überwiegenden Anteilen Ethylacrylat und/oder n-Propylacrylat als Zusatz zu Elektrotauchbädern zur Verbesserung der Oberflächenbeschaffenheit der mittels Elektrotauchlackierung überzogenen Gegenstände.

2. Für die Elektrotauchlackierung geeignete Bindemittelsysteme auf der Grundlage von basischen, thermisch vernetzbaren Epoxid- oder Polyurethanharzen als Bindemittel (B), enthaltend 0,001 bis 1 Gew.% eines Polymerisats (I) aus überwiegenden Anteilen Ethylacrylat und/oder n-Propylacrylat, bezogen auf den Gesamtfeststoffgehalt des Bindemittelsystems.

3. Bindemittelsysteme nach Anspruch 2, dadurch gekennzeichnet, daß sie 0,01 bis 0,75 Gew.% eines Polymerisats (I) enthalten.

4. Für die Elektrotauchlackierung geeignete Pigmentpastenzubereitungen aus Pigmenten, Bindemitteln, Lösungsmitteln, Füllstoffen und sonstigen Lackhilfsstoffen, enthaltend 0,0005 bis 0,5 Gew.% eines Polymerisats (I) aus überwiegenden Anteilen Ethylacrylat und/oder n-Propylacrylat, bezogen auf die gesamte Pigmentpastenzubereitung.

5. Pigmentpastenzubereitungen nach Anspruch 4, dadurch gekennzeichnet, daß sie 0,1 bis 0,4 Gew.% eines Polymerisats (I) enthalten

6. Bindemittelsysteme oder Pigmentpastenzubereitungen nach einem der Ansprüch 2 bis 5, dadurch gekennzeichnet, daß das Polymerisat (I) ein Homopolymerisat aus Ethylacrylat oder aus n-Propylacrylat ist.

7. Bindemittelsysteme oder Pigmentpastenzubereitungen nach einem der Ansprüche 2 bis 5, dadurch gekennzeichnet, daß das Polymerisat (I) ein Copolymerisat aus Ethylacrylat und n-Propylacrylat ist.

8. Elektrotauchlackbäder, hergestellt unter Verwendung von Bindemittelsystemen oder Pigmentpastenzubereitungen nach einem der Ansprüche 2 bis 7.


## Claims

1. Use of addition polymers (I) comprising predominant proportions of ethyl acrylate and/or n-propyl acrylate as an addition to electrodeposition coating baths for improving the surface quality of articles coated by means of electrodeposition coating.

2. Binder systems which are suitable for electrodeposition coating and are based on basic, thermally crosslinkable epoxy resins or polyurethane resins as binders (B) comprising from 0.001 to 1% by weight of an addition polymer (I) comprising predominant proportions of ethyl acrylate and/or n-propyl acrylate, based on the overall solids content of the binder system.

3. Binder systems according to claim 2, characterized in that they contain from 0.01 to 0.75% by weight of an addition polymer (I).

4. Pigment paste formulations suitable for electrodeposition coating and comprising pigments, binders, solvents, fillers and other paint auxiliaries, containing from 0.0005 to 0.5% by weight of an addition polymer (I) comprising predominant proportions of ethyl acrylate and/or n-propyl acrylate, based on the overall pigment paste formulation.

5. Pigment paste formulations according to claim 4, characterized in that they contain from 0.1 to 0.4% by weight of an addition polymer (I).

6. Binder systems or pigment paste formulations according to one of claims 2 to 5, characterized in that the addition polymer (I) is a homopolymer of ethyl acrylate or of n-propyl acrylate.

7. Binder systems or pigment paste formulations according to one of claims 2 to 5, characterized in that the addition polymer (I) is a copolymer of ethyl acrylate or of n-propyl acrylate.

8. Electrodeposition coating baths, prepared using binder systems or pigment paste formulations according to one of claims 2 to 7.


## Revendications

1. Utilisation de polymères (I) dont les composants prédominants sont l'acrylate d'éthyle et/ou l'acrylate de n-propyle, en tant qu'additif pour des bains d'électrodéposition en vue d'améliorer la qualité de surface des articles revêtus par revêtement électrophorétique.

2. Systèmes de liants appropriés pour le revêtement électrophorétique, à base de résines époxy ou de polyuréthanne basiques et réticulables thermiquement, en tant que liants (B), contenant de 0,001 à 1% en poids d'un polymère (I) dont les composants prédominants sont l'acrylate d'éthyle et/ou l'acrylate de n-propyle, par rapport à la teneur totale en matières solides du système de liant.

3. Systèmes de liants selon la revendication 2, caractérisés en ce qu'ils contiennent de 0,01 à 0,75% en poids d'un polymère (I).

4. Compositions de pâtes pigmentaires appropriées pour le revêtement électrophorétique composées de pigments, de liants, de solvants, de charges et d'autres auxiliaires pour peinture, contenant de 0,0005 à 0,5% en poids d'un polymère (I) dont les composants prédominants sont l'acrylate d'éthyle et/ou l'acrylate de n-propyle, par rapport à la totalité de pâte pigmentaire.

5. Compositions de pâtes pigmentaires selon la revendication 4, caractérisées en ce qu'elles contiennent de 0,1 à 0,4% en poids d'un polymère (I).

6. Systèmes de liants ou compositions de pâtes pigmentaires selon l'une quelconque des revendications 2 à 5, caractérisés en ce que le polymère (I) est un homopolymère d'acrylate d'éthyle ou d'acrylate de n-propyle.

7. Systèmes de liants ou compositions de pâtes pigmentaires selon l'une quelconque des revendications 2 à 5, caractérisés en ce que le polymère (I) est un copolymère d'acrylate d'éthyle ou d'acrylate de n-propyle.

8. Bains de revêtement électrophorétique, préparés en employant des systèmes de liants ou des compositions de pâtes pigmentaires selon l'une quelconque des revendications 2 à 7.